# FASCICULE DE BREVET EUROPEEN

(11) **EP 3 545 295 B1**
(45) Date de publication et mention de la délivrance du brevet: **11.01.2023**
(21) Numéro de dépôt: 17817784.6
(22) Date de dépôt: 23.11.2017
(51) Int. Cl.: G01N 29/04, G01N 29/30, G01N 29/44, G01N 29/46, G01B 17/02, G01N 29/02, G01N 29/26

(54) **PROCEDE DE CONTROLE PAR ONDES GUIDEES**
VERFAHREN ZUM TESTEN MIT GEFÜHRTEN WELLEN
METHOD FOR TESTING WITH GUIDED WAVES

(30) Priorité: 25.11.2016 FR 1661518
(43) Date de publication de la demande: 02.10.2019
(73) Titulaire: Safran, 75015 Paris (FR); Commissariat à l'énergie atomique et aux énergies alternatives, 75015 Paris (FR)
(72) Inventeur: DUCOUSSO, Mathieu Loïc, 77550 Moissy-Cramayel Cedex (FR); JENSON, Frédéric, 77550 Moissy-Cramayel Cedex (FR); CHAPUIS, Bastien Jacques, 73100 TRESSERVE (FR); RIBAY, Guillemette Danielle Joelle Marie, 92340 Bourg la Reine (FR); TAUPIN, Laura, 91400 Orsay (FR)
(74) Mandataire: Cabinet Beau de Loménie
(86) Numéro de dépôt international: PCT/FR2017/053237
(87) Numéro de publication internationale: WO 2018/096285

(56) Documents cités:
- JP-A- H07 120 248
- WU T-T ET AL: "Inverse determinations of thickness and elastic properties of a bonding layer using laser-generated surface waves", ULTRASONICS, IPC SCIENCE AND TECHNOLOGY PRESS LTD. GUILDFORD, GB, vol. 37, no. 1, 1 janvier 1999 (1999-01-01), pages 23-30, XP004154489, ISSN: 0041-624X, DOI: 10.1016/S0041-624X(98)00030-4
- MORENO E ET AL: "Thickness measurement in composite materials using lamb waves - Viscoelastic effects", ULTRASONICS, IPC SCIENCE AND TECHNOLOGY PRESS LTD. GUILDFORD, GB, vol. 37, no. 8, 1 janvier 2000 (2000-01-01), pages 595-599, XP004186956, ISSN: 0041-624X, DOI: 10.1016/S0041-624X(99)00027-X

## Description

### DOMAINE DE L'INVENTION

L'invention se rapporte au domaine des contrôles non destructifs d'assemblages de différents matériaux, et en particulier au domaine des contrôles non destructifs de collages structurels qui sont configurés pour assembler différents matériaux de manière à supporter la reprise d'efforts mécaniques.

De tels collages structurels trouvent par exemple une application dans le domaine aéronautique, où ils permettent d'assembler de manière solide et efficace différents matériaux pouvant présenter des profils complexes, au moyen d'une couche de matériau collant, sans alourdir la structure ni augmenter significativement les coûts de fabrication.

### ETAT DE LA TECHNIQUE ANTERIEURE

Il n'existe pas à ce jour de procédure de contrôle non destructif éprouvée qui permette de garantir la tenue mécanique d'un assemblage par collage de différents matériaux.

Les solutions existantes pour contrôler le collage de deux matériaux par une couche d'un matériau collant consistent actuellement à réaliser des prélèvements périodiques pour effectuer des mesures destructives.

Différentes recherches ont été menées pour trouver une méthode non destructive, celles-ci allant de la mesure d'absorption de rayonnement X à l'utilisation d'ondes ultrasonores en mode de réflexion. Cependant, compte tenu, d'une part, de la forte ressemblance, en particulier dans le domaine aéronautique, entre les caractéristiques mécaniques du matériau collant et des matériaux collés, tels que des composites à matrice organique, ainsi qu'en raison des épaisseurs caractéristiques considérées, de telles méthodes ne permettent pas de répondre de manière satisfaisante aux exigences d'efficacité et de fiabilité des contrôles.

Par ailleurs, en particulier pour une application dans le domaine aéronautique, par exemple pour le contrôle du collage des matériaux constituant une aube, compte tenu de la complexité du profil d'une telle pièce, qui présente habituellement une géométrie courbe, il est très difficile, voire impossible, de modéliser de manière satisfaisante de telles pièces, et, par suite, de prédire numériquement le comportement des signaux ultrasonores.

L'état de la technique antérieure concernant l'emploi des courbes de dispersion pour déterminer les épaisseurs des matériaux multi-couches est décrit dans les documents suivants: WU T-T et al : "Inverse déterminations of thickness and elastic properties of a bonding layer using laser-generated surface waves", ULTRASONICS, vol. 37, no. 1, 1999, JP H07 120248 A et MORENO E ET AL: "Thickness measurement in composite materials using lamb waves - Viscoelastic effects", ULTRASONICS, vol. 37, no. 8, 2000.

### PRESENTATION DE L'INVENTION

Le présent exposé concerne un procédé de contrôle non destructif qui est simple à réaliser, rapide et robuste pour permettre de contrôler, dans un environnement industriel, l'assemblage par collage de différents matériaux.

L'invention porte ainsi sur un procédé de contrôle non destructif d'un assemblage collé d'un premier matériau ayant une première épaisseur, une face supérieure et une face inférieure, d'un deuxième matériau ayant une deuxième épaisseur et une face supérieure et d'un troisième matériau collant ayant une troisième épaisseur, le troisième matériau collant étant disposé entre la face inférieure du premier matériau et la face supérieure du deuxième matériau de manière à assembler par collage les premier et deuxième matériaux, le procédé comprenant :
- une étape au cours de laquelle on dépose un traducteur ultrasonore sur la face supérieure du premier matériau ;
- une étape au cours de laquelle on génère des ondes guidées dans l'assemblage collé ;
- une étape au cours de laquelle on réalise un diagramme de courbe de dispersion dans un premier repère à partir de la réception des ondes guidées générées dans l'assemblage collé ;
- une étape au cours de laquelle on fournit une pluralité de courbes de dispersion de référence réalisées dans le premier repère, chacune desdites courbes de dispersion de référence étant obtenue par la génération d'ondes guidées dans un assemblage de référence des premier et deuxième matériaux collé par le troisième matériau collant, l'assemblage de référence collé présentant des épaisseurs calibrées ;
- une étape au cours de laquelle on compare le diagramme de courbe de dispersion de l'assemblage collé contrôlé à ladite pluralité de courbes de dispersion de référence ; et
- une étape au cours de laquelle on estime au moins l'une des première, deuxième et troisième épaisseurs de l'assemblage collé contrôlé.

On comprend donc que l'assemblage collé à contrôler est un assemblage tricouche des premier, deuxième et troisième matériaux, le troisième matériau collant s'étendant entre les premier et deuxième matériaux pour les assembler par collage.

De manière connue, le traducteur ultrasonore comporte des éléments alignés fonctionnant en mode émission et en mode réception.

De manière connue, le contact du traducteur ultrasonore sur la face supérieure du premier matériau est réalisé par les moyens classiquement utilisés lors d'un contrôle ultrasonore couplant visqueux ou liquide.

L'utilisation d'ondes ultrasonores guidées permet ainsi d'obtenir un diagramme de courbe de dispersion relatif à l'assemblage collé à contrôler ; il est ainsi possible d'obtenir, par extraction des signaux reçus par les éléments récepteurs du traducteur ultrasonore, une cartographie des niveaux d'énergie dans un premier repère. Cette cartographie prend par exemple la forme d'une représentation, par des niveaux de couleur ou de gris, de l'énergie en chaque point dudit premier repère. On y voit apparaître des lignes courbes de forte énergie, appelées « trajectoires », qui reflètent chacune un mode vibratoire et qui forment un ensemble caractéristique du milieu de propagation, en l'espèce de l'assemblage collé à contrôler. En comparant ce diagramme de courbe de dispersion à un ensemble de courbes de dispersion de référence réalisées dans ledit premier repère, on peut ainsi rapprocher les caractéristiques de l'assemblage collé à contrôler de celles de l'un des assemblages collés de référence, de manière à estimer les caractéristiques de l'assemblage collé à contrôler, et plus particulièrement pour estimer au moins l'une des épaisseurs des premier, deuxième et troisième matériaux.

Par courbe de dispersion de référence, on entend des courbes de dispersion, obtenues de manière similaire au diagramme de courbe de dispersion réalisé relativement à l'assemblage collé à contrôler, et en particulier réalisées dans le même premier repère que celui choisi pour le diagramme de courbe de dispersion, les courbes de dispersion de référence étant réalisée par génération d'ondes ultrasonores guidées dans des assemblages collés de référence des premier, deuxième et troisième matériaux.

La réalisation du diagramme de courbe de dispersion ainsi que celle des courbes de dispersion de référence, à partir de l'émission d'ondes guidées dans un milieu donné, sont connues et sont en particulier décrites dans le document EP 2 440 140. Par exemple et de manière non limitative, le diagramme de courbe de dispersion et les courbes de dispersion de référence peuvent être obtenus en réalisant une transformation de Fourier bidimensionnelle (Bi-FFT) d'une unique acquisition où les éléments émetteurs du traducteur ultrasonore émettent un signal ultrasonore et où les éléments récepteurs détectent le signal ultrasonore qui s'est propagé dans l'assemblage collé des premier, deuxième et troisième matériaux ; alternativement, le diagramme et les courbes de dispersion de référence peuvent être obtenus en réalisant une série d'acquisitions successives où les éléments émetteurs du traducteur ultrasonore émettent le signal ultrasonore, les éléments récepteurs le détectant alors que les éléments émetteurs varient entre deux acquisitions successives, une approche du type décomposition en valeurs singulières (SVD) étant ensuite appliquée.

Le procédé selon la présente invention permet ainsi, de manière non destructive et sans recourir, en particulier, à une simulation numérique de l'assemblage collé à contrôler, d'estimer les caractéristiques à contrôler de l'assemblage, et en particulier au moins l'une des épaisseurs des premier, deuxième et troisième matériaux.

Alternativement, la mise en œuvre du procédé selon la présente invention est encore facilitée par le fait qu'on peut utiliser tout type de base de représentation des signaux ultrasonores (mesure et référence).

Le procédé selon la présente invention constitue ainsi une méthode robuste et efficace pour contrôler, de manière non destructive, les caractéristiques d'un assemblage collé à contrôler, et, par exemple et de manière non limitative, lorsque le troisième matériau est un matériau collant configuré pour assembler par collage les premier et deuxième matériaux, l'épaisseur de la couche dudit troisième matériau collant et, par suite, la solidité de l'assemblage des premier et deuxième matériaux par le troisième matériau collant.

L'invention est déclinée ci-après dans une série de variantes de réalisation, qui peuvent être considérées seules ou en combinaison avec une ou plusieurs des précédentes.

Dans certains modes de réalisation, le procédé comprend en outre une étape au cours de laquelle on identifie, parmi ladite pluralité de courbes de dispersion de référence, celle présentant le plus de similitudes avec le diagramme de courbe de dispersion de l'assemblage contrôlé.

Dans certains modes de réalisation, l'étape d'identification de la courbe de dispersion de référence ayant le plus de similitudes avec le diagramme de courbe de dispersion de l'assemblage contrôlé est réalisée par une méthode de comparaison d'images.

L'utilisation d'une méthode de comparaison d'images permet d'identifier facilement et rapidement, parmi les courbes de dispersion de référence, celle dont les caractéristiques sont les plus proches de celles du diagramme de courbe de dispersion et, par suite, parmi les assemblages collés de référence à partir desquels les courbes de dispersion de référence ont été réalisées, celui dont les matériaux présentent les caractéristiques les plus proches de celles de l'assemblage collé à contrôler.

Dans certains modes de réalisation, ladite méthode de comparaison d'images comprend un algorithme de recherche du type Structural Similarity Index. Un tel algorithme est en particulier décrit dans le document « Image Quality Assessment: From Error Visibility to Structural Similarity » (IEEE Transactions on image processing, vol. 13, n° 4, avril 2004).

Alternativement, d'autres méthodes de comparaison d'images peuvent être utilisées, telles qu'un algorithme du type FSIM (« Feature Similarity Index for Image »). On peut également recourir à des méthodes de classification du type RVM (« Relevance Vector Machine ») ou CNN (« Convolutional Neural Network »), ou bien encore à des méthodes de régression logistique.

Le procédé selon l'invention comporte en outre une étape au cours de laquelle on optimise de manière itérative une zone de comparaison du diagramme de courbe de dispersion de l'assemblage contrôlé adaptée à la comparaison dudit diagramme de
courbe de dispersion de l'assemblage collé contrôlé avec ladite pluralité de courbes de dispersion de référence.

Par cette disposition, on détermine les intervalles des grandeurs représentées dans le diagramme de courbe de dispersion qui permettent d'améliorer l'efficacité de la comparaison dudit diagramme de courbe de dispersion avec la pluralité des courbes de dispersion de référence, de manière à améliorer l'efficacité du procédé de contrôle selon la présente invention.

Dans certains modes de réalisation, chacune des courbes de dispersion de référence est réalisée en moyennant plusieurs courbes de dispersion obtenues à partir de plusieurs générations d'ondes guidées sur ledit assemblage collé de référence correspondant.

Par cette disposition, on diminue l'influence des paramètres extérieurs, tels que l'opérateur réalisant les courbes de dispersion, la température, le système d'acquisition utilisé, ...

Dans certains modes de réalisation, le traducteur ultrasonore disposé sur la face supérieure du premier matériau comporte des éléments émetteurs et des éléments récepteurs directement adjacents aux éléments émetteurs.

Par cette disposition, la qualité de l'image du diagramme de courbe de dispersion ainsi que celle des courbes de dispersion de référence est améliorée ; en particulier, la continuité et l'homogénéité des courbes obtenues sont améliorées, ce qui contribue à l'efficacité du procédé de contrôle selon la présente invention.

Dans certains modes de réalisation, la face supérieure du premier matériau présente une forme courbe, et le traducteur ultrasonore présente des propriétés de souplesse suffisantes pour qu'il puisse se conformer à la forme de la face supérieure du premier matériau.

Ainsi, l'utilisation d'un traducteur ultrasonore souple permet de l'utiliser pour contrôler des assemblages collés présentant une géométrie complexe, tels qu'une aube, par exemple lorsque le procédé de contrôle est utilisé dans le domaine aéronautique.

Dans certains modes de réalisation, le premier repère est un repère fréquence - nombre d'onde.

Alternativement, on peut utiliser une base du type espace - temps, ou une base fréquence - vitesse de propagation.

Dans un mode particulier de réalisation, les différentes étapes du procédé de contrôle selon la présente invention sont déterminées par des instructions de programmes d'ordinateurs ou de microprocesseurs.

En conséquence, l'invention vise aussi un programme d'ordinateur ou de microprocesseur sur un support d'informations, ce programme étant susceptible d'être mis en oeuvre dans un dispositif de contrôle ou plus généralement dans un ordinateur ou par un microprocesseur, ce programme comportant des instructions adaptées à la mise en oeuvre des étapes d'un procédé de contrôle non destructif tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disk), un disque dur ou un DVD.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### BREVE DESCRIPTION DES DESSINS

L'invention et ses avantages seront mieux compris à la lecture de la description détaillée faite ci-après d'un mode de réalisation de l'invention donné à titre d'exemple non limitatif. Cette description fait référence aux pages de figures annexées, sur lesquelles :
- la figure **1** représente schématiquement un exemple d'assemblage collé de matériaux à contrôler ;
- la figure **2** représente schématiquement un exemple de diagramme de courbe de dispersion d'un assemblage collé de matériaux à contrôler ; et
- la figure **3** représente schématiquement les principales étapes du procédé de contrôle selon la présente invention.

### DESCRIPTION DETAILLEE D'EXEMPLES DE REALISATION

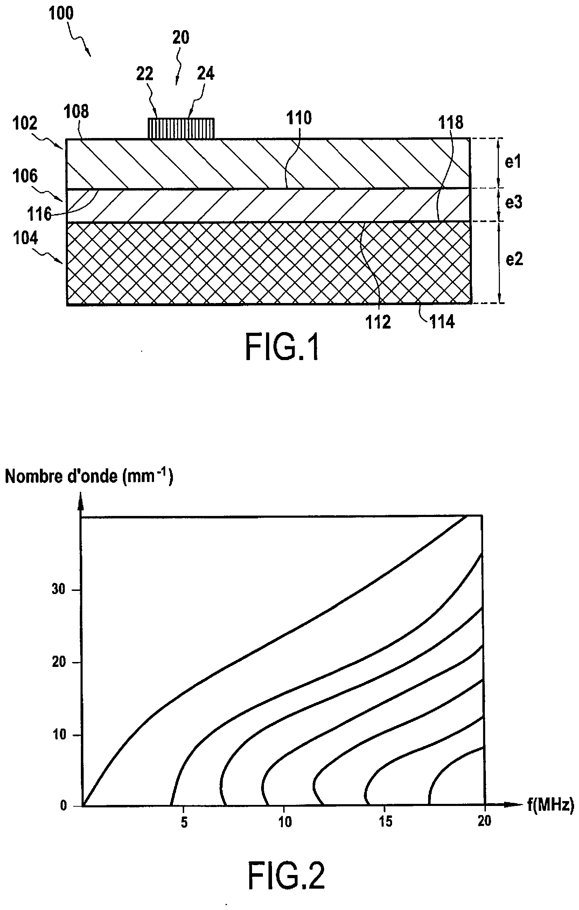

La figure **1** représente schématiquement un assemblage **100** collé de différents matériaux auquel on applique le procédé de contrôle non destructif selon la présente invention.

Par exemple et de manière non limitative, l'assemblage **100** collé comporte une couche supérieure constituée par un premier matériau **102** ayant une première épaisseur **e1** et une couche inférieure constituée par un deuxième matériau **104** ayant une deuxième épaisseur **e2** ; entre les premier et deuxième matériaux **102, 104,** s'étend un troisième matériau **106** collant, configuré pour maintenir ensemble les premier **102** et deuxième **104** matériaux, qui présente une troisième épaisseur **e3.**

Le premier matériau **102** comporte une face supérieure **108** et une face inférieure **110,** et le deuxième matériau **104** comporte une face supérieure **112** et une face inférieure **114** ; le troisième matériau **106** collant comporte une face supérieure **116** disposée contre la face inférieure **110** du premier matériau **102,** et une face inférieure **118,** disposée contre la face supérieure **112** du deuxième matériau **104.**

Par exemple et de manière non limitative, le deuxième matériau **104** est un matériau composite, dont l'épaisseur **e2** est comprise entre 3 mm et 100 mm.

Dans d'autres modes de réalisation, le premier matériau **102** est du type titane, dont l'épaisseur **e1** est, de préférence, comprise entre 100 micromètres et 1 000 micromètres.

Par exemple et de manière non limitative, le troisième matériau **106** collant présente une troisième épaisseur **e3** comprise entre 50 micromètres et 350 micromètres

Dans l'exemple schématique de la figure **1****,** les matériaux **102, 104** et **106** présentent un profil rectiligne et une épaisseur constante, mais on peut bien évidemment appliquer le procédé de contrôle selon la présente invention à tout type de profil de matériau, et en particulier à des matériaux présentant un profil complexe, tel qu'un profil courbe.

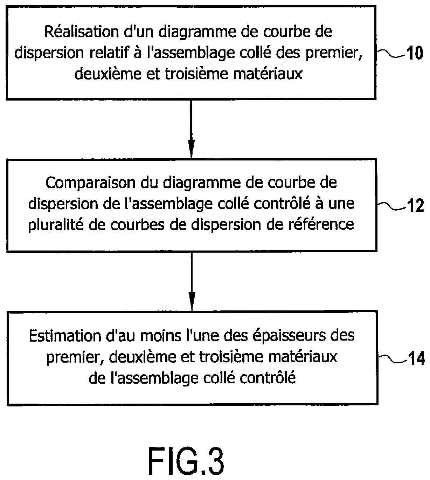

Tel que représenté sur le schéma de la figure **3****,** le procédé de contrôle non destructif selon la présente invention de l'assemblage **100** comporte tout d'abord une première étape **10** au cours de laquelle on réalise un diagramme de courbe de dispersion relatif à l'assemblage collé à contrôler **100.**

Pour ce faire, et tel que représenté sur la figure **1****,** on dispose sur la surface supérieure **108** du premier matériau **102** un traducteur ultrasonore **20.**

Le traducteur ultrasonore **20** comporte des éléments émetteurs **22** et des éléments récepteurs **24.**

Dans certains modes de réalisation, les éléments émetteurs **22** sont directement adjacents aux éléments récepteurs **24** ; dit autrement, et contrairement aux traducteurs ultrasonores connus de l'art antérieur, et en particulier divulgués dans le document EP 2 440 140 cité précédemment, le traducteur ultrasonore **20** utilisé pour la mise en œuvre du procédé selon la présente invention ne comporte pas de vide formant barrière entre les éléments émetteurs **22** et les éléments récepteurs **24.**

De manière à permettre la mise en œuvre du procédé selon la présente invention sur un assemblage collé à contrôler **100** dont la face supérieure **108** du premier matériau **102** présente un profil complexe, tel qu'un profil courbe, le traducteur ultrasonore **20** peut présenter des caractéristiques de souplesse lui permettant de se conformer à la forme du premier matériau **102.**

Une fois le traducteur ultrasonore **20** disposé sur l'assemblage **100,** des ondes ultrasonores guidées, telles que par exemple des ondes de Lamb, sont générées par les éléments émetteurs **22** pour être guidées dans l'assemblage **100.**

Sur la base des signaux reçus par les éléments récepteurs **24,** un diagramme de courbe de dispersion relatif audit assemblage **100** est réalisé dans un premier repère.

Par exemple et de manière non limitative, tel que représenté sur la figure **2****,** le premier repère peut être un repère du type fréquence - nombre d'onde, mais on peut tout aussi bien concevoir d'autres types de repère, tels que des repères espace - temps ou fréquence - vitesse de propagation, dans lesquels réaliser un diagramme de courbe de dispersion sur la base des signaux captés par les éléments récepteurs **24** du traducteur ultrasonore **20.**

Dans un deuxième temps, et tel que représenté sur le schéma de la figure **3****,** on compare le diagramme de courbe de dispersion ainsi obtenu avec une pluralité de courbes de dispersion de référence.

Par courbe de dispersion de référence, on entend des courbes de dispersion, obtenues de manière similaire au diagramme de courbe de dispersion décrit précédemment, et en particulier réalisées dans le même premier repère que celui choisi pour le diagramme de courbe de dispersion, les courbes de dispersion de référence étant réalisée par génération d'ondes ultrasonores guidées dans des assemblages collés de référence des premier, deuxième et troisième matériaux **102, 104, 106.**

En particulier, si l'objectif du contrôle non destructif mis en oeuvre par le procédé selon la présente invention est de déterminer l'épaisseur **e3** du troisième matériau collant **106,** les autres paramètres étant connus, les assemblages de référence à partir desquels les courbes de dispersion de référence sont réalisées diffèrent les uns des autres uniquement par l'épaisseur **e3** du troisième matériau collant **106.**

De manière similaire, si le contrôle mis en oeuvre vise à contrôler un assemblage dont les premier **102** et troisième **106** matériaux présentent des épaisseurs variables et non connues, les assemblages de référence à partir desquels les courbes de dispersion de référence sont réalisées différeront les uns des autres par l'épaisseur **e3** du troisième matériau **106** et par l'épaisseur **e1** du premier matériau **102.**

Par extension, le procédé selon la présente invention peut également permettre de mesurer les épaisseurs **e1, e2, e3** des différents matériaux **102, 104, 106** de l'assemblage collé à contrôler **100,** si des courbes de dispersion de référence sont réalisées sur des assemblages de référence dont l'épaisseur des trois matériaux varie. En outre, pour que la deuxième épaisseur **e2** du deuxième matériau **104** puisse être mesurée, elle doit être suffisamment fine pour permettre à des ondes acoustiques ultrasonores de subir des réflexions acoustiques sur la face inférieure **114** et être détectées par les éléments récepteurs **24** du traducteur ultrasonore **20.**

On peut également concevoir la mise en œuvre du procédé selon la présente invention pour le contrôle d'un assemblage comportant plus que trois matériaux.

Les différentes courbes de dispersion de référence qui constituent la base de données aux éléments de laquelle le diagramme de courbe de dispersion obtenu sur l'assemblage collé à contrôler est comparé dans le procédé selon la présente invention peuvent, par exemple et de manière non limitative, être obtenues par moyennage à partir de plusieurs acquisitions réalisées par la génération d'ondes guidées sur l'assemblage collé de référence correspondant, de manière à limiter l'impact des conditions extérieures applicables lorsque l'acquisition est réalisée.

La comparaison **12** du diagramme de courbe de dispersion avec les différents éléments constituant la base de données précitée est réalisée, par exemple et de manière non limitative, par une méthode de comparaison d'images. Une telle méthode peut comprendre un algorithme du type Structural Similarity Index, du type FSIM (« Feature Similarity Index for Image ») ; on peut également recourir à des méthodes de classification du type RVM (« Relevance Vector Machine ») ou CNN (« Convolutional Neural Network »), ou bien encore à des méthodes de régression logistique.

La mise en oeuvre d'une méthode de comparaison d'images nécessite de déterminer préalablement une zone de comparaison du diagramme de courbe de dispersion de l'assemblage contrôlé **100** adaptée à la comparaison dudit diagramme de courbe de dispersion avec ladite pluralité de courbes de dispersion de référence.

Dans certains modes de réalisation, la détermination de ladite zone de comparaison est réalisée de manière itérative en appliquant la méthode de comparaison d'images sur une première zone de comparaison, puis en faisant varier les plages considérées, par exemple les intervalles de fréquence et/ou nombre d'onde, dans le cas représenté sur la figure **2****,** puis en appliquant de nouveau la méthode de comparaison d'images, jusqu'à obtenir la zone de comparaison optimale permettant de comparer de manière efficace le diagramme de courbe de dispersion avec les éléments de la base de données des courbes de dispersion de référence.

Après comparaison du diagramme de courbe de dispersion avec les courbes de dispersion de référence, et une fois identifiée la courbe de dispersion de référence présentant le plus de similitudes avec le diagramme de courbe de dispersion relatif à l'assemblage **100,** tel que représenté sur la figure **3****,** les caractéristiques de l'assemblage collé **100** à contrôler sont estimées.

Le procédé permet ainsi de déterminer au moins l'une des épaisseurs **e1, e2** et **e3** des premier, deuxième et troisième matériaux **102, 104, 106** de l'assemblage **100** collé à contrôler (étape **14**).

Par exemple, le procédé selon la présente invention permet de déterminer la troisième épaisseur **e3** du troisième matériau collant **106** qui s'étend entre les premier et deuxième matériaux **102, 104** pour assembler lesdits matériaux par collage.

Tel qu'évoqué précédemment, en fonction des assemblages collés de référence utilisés pour constituer la base de données, le procédé peut également permettre de déterminer les caractéristiques relatives aux premier et deuxième matériaux **102, 104,** voire à d'autres matériaux, dans le cas d'assemblages collés à contrôler **100** plus complexes.

Il est bien entendu que le procédé selon la présente invention, en ce qu'il permet en particulier de déterminer la troisième épaisseur **e3** du troisième matériau collant **106,** permet également de détecter l'absence éventuelle dudit troisième matériau collant **106**entre les premier et deuxième matériaux **102, 104.** Pour ce faire, la base de données précédemment évoquée doit également comporter des éléments relatifs à des assemblages de référence ne comportant pas de couche du troisième matériau collant **106.**

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de contrôle non destructif d'un assemblage (100) collé d'un premier matériau (102) ayant une première épaisseur (e1), une face supérieure (108) et une face inférieure (110), d'un deuxième matériau (104) ayant une deuxième épaisseur (e2) et une face supérieure (112) et d'un troisième matériau collant (106) ayant une troisième épaisseur (e3), le troisième matériau collant étant disposé entre la face inférieure du premier matériau et la face supérieure du deuxième matériau de manière à assembler par collage les premier et deuxième matériaux, le procédé comprenant :
a) une étape au cours de laquelle on dépose un traducteur ultrasonore (20) sur la face supérieure du premier matériau ;
b) une étape au cours de laquelle on génère des ondes guidées dans l'assemblage collé ;
c) une étape (10) au cours de laquelle on réalise un diagramme de courbe de dispersion dans un premier repère à partir de la réception des ondes guidées générées dans l'assemblage collé ;
d) une étape au cours de laquelle on fournit une pluralité de courbes de dispersion de référence réalisées dans le premier repère, chacune desdites courbes de dispersion de référence étant obtenue par la génération d'ondes guidées dans un assemblage de référence des premier et deuxième matériaux collé par le troisième matériau collant, l'assemblage de référence collé présentant des épaisseurs calibrées ;
e) une étape (12) au cours de laquelle on compare le diagramme de courbe de dispersion de l'assemblage collé contrôlé à ladite pluralité de courbes de dispersion de référence ;
f) une étape (14) au cours de laquelle on estime au moins l'une des première, deuxième et troisième épaisseurs de l'assemblage collé contrôlé (100), et
g) le procédé comporte en outre une étape au cours de laquelle on optimise de manière itérative une zone de comparaison du diagramme de courbe de dispersion de l'assemblage collé contrôlé adaptée à la comparaison dudit diagramme de courbe de dispersion avec ladite pluralité de courbes de dispersion de référence.

2. Procédé de contrôle non destructif selon la revendication **1,** comprenant en outre une étape au cours de laquelle on identifie, parmi ladite pluralité de courbes de dispersion de référence, celle présentant le plus de similitudes avec le diagramme de courbe de dispersion de l'assemblage collé contrôlé.

3. Procédé de contrôle non destructif selon la revendication **2,** dans lequel l'étape d'identification de la courbe de dispersion de référence ayant le plus de similitudes avec le diagramme de courbe de dispersion de l'assemblage contrôlé est réalisée par une méthode de comparaison d'images.

4. Procédé de contrôle non destructif selon la revendication **3,** dans lequel ladite méthode de comparaison d'images comprend un algorithme de recherche du type Structural Similarity Index.

5. Procédé de contrôle non destructif selon l'une quelconque des revendications **1 à 4,** dans lequel chacune desdites courbes de dispersion de référence est réalisée en moyennant plusieurs courbes de dispersion obtenues à partir de plusieurs générations d'ondes guidées dans l'assemblage de référence correspondant.

6. Procédé de contrôle non destructif selon l'une quelconque des revendications **1 à 5,** dans lequel le traducteur ultrasonore disposé sur la face supérieure du premier matériau comporte des éléments émetteurs (22) et des éléments récepteurs (24) directement adjacents aux éléments émetteurs.

7. Procédé de contrôle non destructif selon l'une quelconque des revendications **1 à 6,** dans lequel la face supérieure du premier matériau présente une forme courbe, le traducteur ultrasonore présentant des propriétés de souplesse suffisantes pour qu'il puisse se conformer à la forme de la face supérieure du premier matériau.

8. Procédé de contrôle non destructif selon l'une quelconque des revendications **1 à 7,** dans lequel le premier repère est un repère fréquence - nombre d'onde.

9. Programme comportant des instructions pour l'exécution des étapes du procédé de contrôle non destructif selon l'une quelconque des revendications **1 à 8**, où seulement les étapes c)-g) de la revendication 1 sont exécutées, lorsque ledit programme est exécuté par un ordinateur ou par un microprocesseur.

## Patentansprüche

1. Verfahren zur zerstörungsfreien Prüfung einer Klebeverbindung (100) aus einem ersten Werkstoff (102), der eine erste Dicke (e1), eine Oberseite (108) und eine Unterseite (110) aufweist, einem zweiten Werkstoff (104), der eine zweite Dicke (e2) und eine Oberseite (112) aufweist, und einem dritten Klebewerkstoff (106), der eine dritte Dicke (e3) aufweist, wobei der dritte Klebewerkstoff zwischen der Unterseite des ersten Werkstoffs und der Oberseite des zweiten Werkstoffs angeordnet ist, um den ersten und den zweiten Werkstoff durch Kleben zu verbinden, wobei das Verfahren umfasst:
a) einen Schritt, in dem ein Ultraschallwandler (20) auf der Oberseite des ersten Werkstoffs angeordnet wird;
b) einen Schritt, in dem geführte Wellen in der Klebeverbindung generiert werden;
c) einen Schritt (10), in dem ein Dispersionskurvendiagramm an einer ersten Markierung vom Empfang der geführten Wellen an, die in der Klebeverbindung generiert werden, erstellt wird;
d) einen Schritt, in dem eine Vielzahl von Referenzdispersionskurven, die an der ersten Markierung erstellt werden, bereitgestellt wird, wobei jede der Referenzdispersionskurven durch die Generierung von geführten Wellen in einer Referenzverbindung des ersten und des zweiten Werkstoffs, die mit dem dritten Klebewerkstoff geklebt sind, erzielt wird, wobei die geklebte Referenzverbindung kalibrierte Dicken aufweist;
e) einen Schritt (12), in dem das Dispersionskurvendiagramm der geprüften Klebeverbindung mit der Vielzahl von Referenzdispersionskurven verglichen wird;
f) einen Schritt (14), in dem mindestens eine von der ersten, der zweiten und der dritten Dicke der geprüften Klebeverbindung (100) geschätzt wird, und
wobei das Verfahren ferner einen Schritt umfasst, in dem eine Vergleichszone des Dispersionskurvendiagramms der geprüften Klebeverbindung, die an den Vergleich des Dispersionskurvendiagramms mit der Vielzahl von Referenzdispersionskurven angepasst ist, iterativ optimiert wird.

2. Verfahren zur zerstörungsfreien Prüfung nach Anspruch 1, ferner umfassend einen Schritt, in dem aus der Vielzahl von Referenzdispersionskurven diejenige identifiziert wird, die dem Dispersionskurvendiagramm der geprüften Klebeverbindung am ähnlichsten ist.

3. Verfahren zur zerstörungsfreien Prüfung nach Anspruch 2, wobei der Schritt des Identifizierens der Referenzdispersionskurve, die dem Dispersionskurvendiagramm der geprüften Verbindung am ähnlichsten ist, durch ein Bildvergleichsverfahren erfolgt.

4. Verfahren zur zerstörungsfreien Prüfung nach Anspruch 3, wobei das Bildvergleichsverfahren einen Suchalgorithmus nach Art des Structural Similarity Index umfasst.

5. Verfahren zur zerstörungsfreien Prüfung nach einem der Ansprüche 1 bis 4, wobei jede der Referenzdispersionskurven erstellt wird, indem mehrere Dispersionskurven gemittelt werden, die aus mehreren Generierungen geführter Wellen in der entsprechenden Referenzverbindung erzielt werden.

6. Verfahren zur zerstörungsfreien Prüfung nach einem der Ansprüche 1 bis 5, wobei der Ultraschallwandler, der auf der Oberseite des ersten Werkstoffs angeordnet ist, Sendeelemente (22) und Empfangselemente (24), die direkt an die Sendeelemente angrenzen, umfasst.

7. Verfahren zur zerstörungsfreien Prüfung nach einem der Ansprüche 1 bis 6, wobei die Oberseite des ersten Werkstoffs eine gekrümmte Form aufweist, wobei der Ultraschallwandler ausreichende Flexibilitätseigenschaften aufweist, um sich an die Form der Oberseite des ersten Werkstoffs anpassen zu können.

8. Verfahren zur zerstörungsfreien Prüfung nach einem der Ansprüche 1 bis 7, wobei die erste Markierung eine Frequenz-Wellenzahl-Markierung ist.

9. Programm, umfassend Anweisung zur Ausführung der Schritte des Verfahrens zur zerstörungsfreien Prüfung nach einem der Ansprüche 1 bis 8, wobei nur die Schritte c) bis g) nach Anspruch 1 ausgeführt werden, wenn das Programm von einem Computer oder von einem Mikroprozessor ausgeführt wird.

## Claims

1. A non-destructive inspection method for non-destructively inspecting an adhesively bonded assembly (100) of a first material (102) having a first thickness (e1), a top face (108), and a bottom face (110), of a second material (104) having a second thickness (e2) and a top face (112), and of an adhesive third material (106) having a third thickness (e3), the adhesive third material being arranged between the bottom face of the first material and the top face of the second material so as to assemble the first and second materials together by adhesive bonding, the method comprising:
a) a step in which an ultrasound transducer (20) is placed on the top face of the first material;
b) a step in which guided waves are generated in the adhesively bonded assembly;
c) a step (10) in which a dispersion curve plot is established in a first reference frame on the basis of receiving the guided waves generated in the adhesively bonded assembly;
d) a step in which a plurality of reference dispersion curves that are provided that have been established in the first reference frame, each of said reference dispersion curves being obtained by generating guided waves in a reference assembly of the first and second materials adhesively bonded by the adhesive third material, the adhesively bonded reference assembly presenting calibrated thicknesses;
e) a step (12) in which the dispersion curve plot of the adhesively bonded assembly under inspection is compared with said plurality of reference dispersion curves; and
f) a step (14) in which at least one of the first, second, and third thicknesses in the adhesively bonded assembly (100) under inspection is estimated, and
g) the method further including a step of iteratively optimizing a comparison zone for the dispersion curve plot of the adhesively bonded assembly under inspection that is adapted for comparing said dispersion curve plot with said plurality of reference dispersion curves.

2. A non-destructive inspection method according to claim 1, further comprising a step of identifying, from among said plurality of reference dispersion curves, the reference dispersion curve that presents the greatest similarity with the dispersion curve plot of the adhesively bonded assembly under inspection.

3. A non-destructive inspection method according to claim 2, wherein the step of identifying the reference dispersion curve having the greatest similarity with the dispersion curve plot of the assembly under inspection is performed by an image comparison method.

4. A non-destructive inspection method according to claim 3, wherein said image comparison method comprises a search algorithm of the structural similarity index type.

5. A non-destructive inspection method according to any one of claims 1 to 4, wherein each of said reference dispersion curves is prepared by averaging a plurality of dispersion curves obtained from generating a plurality of guided waves in the corresponding reference assembly.

6. A non-destructive inspection method according to any one of claims 1 to 5, wherein the ultrasound transducer placed on the top face of the first material comprises emitter elements (22) and receiver elements (24) that are directly adjacent to the emitter elements.

7. A non-destructive inspection method according to any one of claims 1 to 6, wherein the top face of the first material presents a curved shape, the ultrasound transducer presenting properties of sufficient flexibility to enable it to match the shape of the top face of the first material.

8. A non-destructive inspection according to any one of claims 1 to 7, wherein the first reference frame is a frequency - wave number reference frame.

9. A program including instructions for executing steps of the non-destructive inspection method according to any one of claims 1 to 8, wherein only steps c)-g) of claim 1 are performed when said program is executed by a computer or by a microprocessor.
